Europäisches Patentamt

European Patent Office

Office européen des brevets

(11) Publication number : **0 631 985 A1**

# (12) EUROPEAN PATENT APPLICATION

(21) Application number : **94304811.6**

(51) Int. Cl.[6] : **C01F 7/14**

(22) Date of filing : **30.06.94**

(30) Priority : **30.06.93 GB 9313546**
**14.01.94 GB 9400689**

(43) Date of publication of application :
**04.01.95 Bulletin 95/01**

(84) Designated Contracting States :
**ES FR GR IE IT**

(71) Applicant : **ALLIED COLLOIDS LIMITED**
**P.O. Box 38,**
**Low Moor**
**Bradford, West Yorkshire BD12 0JZ (GB)**

(72) Inventor : **Moody, Gillian Mary**
**106 Granny Hall Lane,**
**Brighouse**
**West Yorkshire HD6 2JJ (GB)**

(74) Representative : **Lawrence, Peter Robin**
**Broughton**
**GILL JENNINGS & EVERY,**
**Broadgate House,**
**7 Eldon Street**
**London EC2M 7LH (GB)**

(54) **Production of alumina.**

(57)    The crystallisation of alumina from pregnant Bayer process liquor is improved by including in a liquor a crystallisation modifier which is a blend of a mineral oil and a silicone oil.

EP 0 631 985 A1

This invention relates to the recovery of alumina from pregnant Bayer process liquors by crystallisation. In the Bayer process, bauxite is digested with aqueous caustic to form a caustic liquor containing sodium aluminate and red mud, the red mud is separated by settling and filtration to produce the pregnant liquor, alumina trihydrate is crystallised from the pregnant liquor, and the supernatant liquor is recycled.

It is known that the yield and properties of the crystals can be significantly affected by deliberate process conditions such as the temperature profile in the process and the amount and nature of crystal seed that is added to the process, and by impurities, especially organic salts such as sodium oxalate and sodium humate.

Although it is naturally desirable to obtain a high yield of crystals, it is undesirable if the yield is provided mainly by very fine (below 45μm) crystals. However the presence of some fine crystals can be desirable for seeding purposes.

Optimum performance requires optimisation of the yield and the average particle size, and the latter may be affected also by the strength of the crystals, i.e., the resistance to attrition. Merely increasing the yield while obtaining reduced crystal size is unsatisfactory, as is obtaining increased crystal size but reduced yield.

It is well known to add a crystallisation modifier to the pregnant liquor in order to impose a deliberate modification on the crystallisation characteristics. The modification that is imposed usually involves a reduction in the proportion of fines, i.e., an increase in the average particle size. The use of mineral oil is described in DE-B-63607 and the use of surfactants in JP-A-54/158398 and Chemical Abstracts 88:75961q. A review of many other known crystal modifiers appears in EP-A-286034. That specification teaches that the proportion of crystals below 44μm can be reduced if the crystal modifier is a combination of an oil-soluble surfactant and a mineral oil in which the surfactant is soluble. There is data in the specification showing that, compared to a process operated without a modifier, the use of the oil alone can give no improvement or only slight improvement.

Because of the variability of Bayer process liquors and conditions there is a continuing need to develop other crystallisation modifier systems that will give an improved particle size distribution, for instance for use in those processes where known systems are not entirely satisfactory, and in particular there is a continuing need to provide a crystallisation modifier system that will give an improved balance between yield and crystal properties, especially particle size.

In the invention, alumina is recovered from pregnant Bayer process liquor by crystallisation after adding a to the liquor crystallisation modifier, characterised in that the crystallisation modifier is a combination of silicone oil and mineral oil in a weight ratio of 10:1 to 1:20.

The invention also includes the novel combination, a crystallisation modifier comprising the combination, and use of the combination as crystallisation modifier in the Bayer process.

The silicone oil may be a polydimethyl siloxane having a molecular weight, defined in terms of kinematic viscosity, of 1 to about 12500cS, preferably 1 to 1000cS. Generally molecular weight is at least 5cS but not more than 200cS. Suitable materials include Dow Corning Silicone Oils 200/5 and 200/50.

The mineral oil may be any mineral oil having a viscosity and other properties such that it can be mixed with the silicone oil (preferably to form a solution or other homogeneous blend) and that can conveniently be pumped. It may be aromatic but preferably is paraffinic. Its boiling point is often in the range 150 to 350°C, preferably 200 to 350°C, more preferably 220 to 280°C.

The ratio silicone oil:mineral oil is usually at least 1:1, and usually 1:2. There is generally no value in having a ratio higher than 1:20 and 1:15 is often a suitable upper limit. Best results are generally obtained with ratios in the range 1:4 to 1:8. The materials and their amounts are preferably such that they form a solution, that is to say that if the required amounts of silicone oil and mineral oil are mixed together and allowed to stand, the mixture remains as a homogeneous mixture with substantially no phase separation.

The components of the crystallisation modifier can be added to the Bayer process liquor separately, in either order, but preferably they are added together. Generally the modifier is supplied as a blend and the required amount of the blend is dosed into the process liquor.

The addition of the crystallisation modifier is generally made after the final filtration stage through which the pregnant liquor passes prior to the crystallisation, i.e., generally after the Kelly filters through which the pregnant liquor often passes between the primary settler and the crystallisation stage. Usually the crystallisation modifier is added as close as practicable to the crystallisation stage. The addition should be made accompanied by sufficient agitation to distribute the modifier through the liquor prior to crystallisation.

The amount of modifier that is required for optimum performance can be found by routine experimentation but is generally in the range 5 to 100mg/l with optimum cost-effectiveness generally being achieved with a dosage of 5 to 50, preferably 10 to 30, mg/l.

Crystallisation is conducted in otherwise conventional manner by cooling, seeding and agitating pregnant liquor. Multiple tanks may be used to provide the long residence time required (up to 50 hours). The tanks can be arranged batchwise or continuously. If batchwise each tank is charged with pregnant liquor and seed and then discharged in sequence. If continuous, pregnant liquor and seed are charged into the first tank continuously and flow through each tank in turn. Plant conditions may vary considerably. Seed addition is usually in the order of 40-300g/l.

It is believed that crystal growth can involve two different mechanisms and that in commercial operation both may occur simultaneously.

Crystal growth involves precipitating alumina onto a growing crystal to enlarge that crystal. It can be simulated in the laboratory by the use of a high seed ratio and cooling.

Agglomeration involves two or more growing crystals agglomerating to produce a larger, single growing crystal around which alumina precipitates. It can be simulated in the laboratory by the use of a lower seed ratio and substantially constant temperature.

The following examples simulate both of the crystal growth mechanisms believed to occur.

Example 1

This example consists of two experiments, which should be interpreted together. Experiment 1 simulated mainly the agglomeration phase of a commercial process and Experiment 2 simulated mainly the crystal growth phase.

In the experiments the Silicone Oil is Dow Corning 200/5 and the mineral oil is Pale Oil 60, namely a paraffinic oil having a boiling point of about 250°C.

Experiment 1

These tests were conducted on pregnant liquor at 75°C for 6 hours with a seed ratio of 0.3. The results are quoted as:

(i) Average particle size - % difference from a blank test conducted at the same time.

(ii) Precipitation yield - % difference from a blank test conducted at the same time.

Positive values indicate an improvement compared to the corresponding process in the absence of a modifier, and negative values indicate a detrimental effect.

Table 1

| Modifier | Dose (mg/l) | Average Particle Size (% difference) | Precipitation yield (% difference) |
|---|---|---|---|
| Silicone Oil | 7.5 | - 2.4 | + 4.8 |
| | 12.5 | - 4.1 | + 19.0 |
| | 25.0 | - 2.7 | + 4.8 |
| Silicone oil: Oleine 85:15 | 7.5 | + 2.6 | + 26.3 |
| | 12.5 | - 0.9 | + 26.3 |
| | 25.0 | + 0.9 | + 26.3 |
| Silicone oil: Nonyl phenyl ethoxylate 85:15 | 7.5 | - 3.3 | - 7.7 |
| | 12.5 | + 0.3 | - 7.7 |
| | 25.0 | - 0.12 | + 8.6 |
| Silicone oil: Mineral oil 15:85 | 7.5 | + 6.1 | 0 |
| | 12.5 | + 6.4 | + 15.5 |
| | 25.0 | + 7.2 | + 30.9 |
| Oleic Acid: Mineral oil 15:85 | 25.0 | + 8.2 | - 6.4 |

## Experiment 2

This process was conducted with a seed ratio of 2.0 with a pregnant liquor that was cooled from 65 to 55°C over 48 hours. There were two crystallisation cycles with alumina hydrate from cycle 1 being used as seed in cycle 2. Crystal modifier was added at each stage.

The results are in terms of the average particle size produced and are quoted as % difference from an untreated sample tested at the same time. A negative value indicates that the average particle size was reduced compared to the blank, while a positive value indicates that it was improved.

Table 2

| Modifier | Dose (mg/l) | 1st Cycle | 2nd Cycle |
|---|---|---|---|
| Silicone Oil | 7.5 | + 4.9 | - 0.6 |
| | 12.5 | + 3.4 | - 5.2 |
| | 25.0 | + 2.1 | - 6.5 |
| Silicone oil: Oleine 85:15 | 7.5 | + 0.9 | + 1.6 |
| | 12.5 | + 1.6 | + 2.0 |
| | 25.0 | - 5.3 | + 4.7 |
| Silicone oil: Nonyl phenyl ethoxylate 85:15 | 7.5 | + 2.6 | + 7.0 |
| | 12.5 | + 8.7 | - 0.9 |
| | 25.0 | + 10.2 | - 2.3 |
| Silicone oil: Mineral oil 15:85 | 7.5 | + 0.3 | - 5.7 |
| | 12.5 | + 14.1 | + 5.9 |
| | 25.0 | + 16.1 | - 0.2 |
| Oleic Acid: Mineral oil 15:85 | 25.0 | + 18.0 | + 15.7 |

The results in Tables 1 and 2 should be read together to represent a process that, as is usual, involves both crystal growth and agglomeration. The results demonstrate that the silicone oil:mineral oil modifier of the invention can give the best and most consistent combination of improved particle size and improved yield. Silicone oil with olein (a fatty acid product) apparently can give a better yield, but the particle size tends to be less satisfactory. Mineral oil and surfactants (EP 286034) can give slightly better particle size improvement but the yield is worse.

Example 2

Experiment 3

The tests conducted in Experiment 1 were repeated but comparing only two product blends -

**Product A**    200/5 Silicone Oil:Pale Oil 60 (15:85)
**Product B**    200/50 Silicone Oil:Exxol D40. (15:85)

Exxol D40 is a de-aromatised paraffinic oil having a boiling point of about 170°C. Product A is the same product as tested in Experiment 1. Each blend was evaluated at 25mg/l and each test was repeated 5 times. The results quoted are the average of the 5 results, but otherwise quoted in the same manner as in Experiment 1.

| | Average Particle Size (% Difference) | Precipitation Yield (% Difference) |
|---|---|---|
| Product A | + 11.6 | + 42 |
| Product B | + 7.7 | + 42 |

Experiment 4

The same products as in Experiment 3 were evaluated as in Experiment 2 of Example 1. In this case single tests at 25 mg/l were conducted.

|  | 1st Cycle | 2nd Cycle |
|---|---|---|
| Product A | + 2.5 | + 6.8 |
| Product B | + 9.8 | + 4.7 |

Taking Experiment 3 and 4 together it can be seen that Product A and Product B perform similarly to each other.

Example 3

Whilst it is desirable that crystals that are formed are as large as possible, it is also important that they are strong. After precipitation the crystals may be subjected to attrition, and if the particles are not sufficiently strong they may break down again. In order to test the strength of the crystals from both agglomeration and crystal growth stages they were tested as follows.

A set weight of hydrate crystals was fluidised using air at 4.2 bar (approximately 60 psi) pressure for 7.5 minutes. The -45µ fraction was measured before and after attrition. The Attrition Index is then calculated as follows:

$$\text{Attrition Index} = \frac{> 45\mu \text{ (before)} - > 45\mu \text{ (after)}}{> 45\mu \text{ (before)}} \times 100$$

The above procedure is thought to be a severe test of resistance to attrition. A low value indicates high resistance to attrition.

| Product | Hydrate Crystals Origin | Attrition Index |
|---|---|---|
| Blank | Experiment 1 | 58 |
| Product A | Experiment 1 | 52 |
| Product C | Experiment 1 | 55 |
| Blank | Experiment 2 1st Cycle | 74 |
| Product A (@ 12.5mg/l) | Experiment 2 1st Cycle | 51 |
| Product A (@ 12.5mg/l) | Experiment 2 2nd Cycle | 53 |
| Product C (@ 25mg/l) | Experiment 2 1st Cycle | 42 |
| Product C (@ 25mg/l) | Experiment 2 2nd Cycle | 45 |
| Blank | Experiment 3 | 59 |
| Product A | Experiment 3 | 57 |
| Product B | Experiment 3 | 58 |

Product C =      15:85 Oleic Acid:Mineral Oil as used in Experiments 1 and 2

Crystals from the 2nd Cycle of Experiment 4 were also subject to Attrition Index, but the results obtained using the untreated sample appeared erroneous at 38.7. Product A and B gave results of 48 and 44 respectively.

Overall the hydrate crystals produced when using the crystal modifiers are more resistant to breakdown by attrition than when no crystal modifier was used.

**Claims**

1.  A process of recovering alumina from pregnant Bayer process liquor by crystallisation after adding to the liquor a crystallisation modifier comprising a mineral oil, characterised in that the crystallisation modifier is a combination of a silicone oil and a mineral oil in a weight ratio 10:1 to 1:20.

2.  A process according to claim 1 in which the weight ratio is 1:2 to 1:15.

3.  A process according to claim 1 in which the weight ratio is 1:4 to 1:8.

4.  A process according to any of claims 1 to 3 in which the silicone oil is a polydimethyl siloxane of molecular weight defined in terms of kinematic viscosity of 1cs to 12500cs.

5.  A process according to any of claims 1 to 3 in which the silicone oil is a polydimethyl siloxane of molecular weight defined in terms of kinematic viscosity of 1cs to 100cs.

6.  A process according to claim 1 in which the mineral oil is a paraffinic oil.

7.  A process according to any preceding claim in which the silicone oil and mineral oil are provided as a homogeneous blend.

8.  A crystallisation modifier for the Bayer process which is a combination of a silicone oil and a mineral oil in a weight ratio of 10:1 to 1:20.

European Patent Office

**EUROPEAN SEARCH REPORT**

Application Number

EP 94 30 4811

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | CHEMICAL ABSTRACTS, vol. 108, no. 16, 18 April 1988, Columbus, Ohio, US; abstract no. 135508, Z. CSILLAG ET AL. 'Separation of aluminium hydroxide from sodium aluminate solutions.' * abstract * & HU-A-43 011 (ALUTERV) 28 September 1987 --- | 1-8 | C01F7/14 |
| D,Y | EP-A-0 286 034 (NALCO CHEMICAL) * the whole document * --- | 1-8 | |
| A | CHEMICAL ABSTRACTS, vol. 99, no. 4, 25 July 1983, Columbus, Ohio, US; abstract no. 24811, R.G. CHERNOVA ET AL. 'Feasibility of using organic compounds for the prevention and elimination of frothing in aluminate solutions.' * abstract * & TSVETN. METALL., vol.2, 1983 pages 27 - 31 --- | 1,4 | |
| A | US-A-4 608 237 (ROE ET AL.) * column 4, line 22 - line 25 * --- | 1,8 | TECHNICAL FIELDS SEARCHED (Int.Cl.6)<br><br>C01F |
| A | EP-A-0 327 660 (VEREINIGTE ALUMINIUM-WERKE) --- | | |
| A | Proc. LIGHT METALS 1990, 119th Annual meeting 18-22 Feb. 1990, Anaheim (US) The Metallurgical Society Warrendale (US) ----- | | |

The present search report has been drawn up for all claims

| Place of search | Date of completion of the search | Examiner |
|---|---|---|
| THE HAGUE | 10 October 1994 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document